# EUROPÄISCHE PATENTSCHRIFT

(11) **EP 1 700 058 B1**
(45) Veröffentlichungstag und Bekanntmachung des Hinweises auf die Patenterteilung: **08.04.2009**
(21) Anmeldenummer: 04791293.6
(22) Anmeldetag: 22.10.2004
(51) Int. Cl.: F16K 31/06, F16K 27/02, F02M 51/06

(54) **VENTIL ZUM STEUERN EINES FLUIDS**
VALVE FOR CONTROLLING A FLUID
SOUPAPE DE COMMANDE D'UN FLUIDE

(30) Priorität: 03.11.2003 DE 10351207
(43) Veröffentlichungstag der Anmeldung: 13.09.2006
(73) Patentinhaber: ROBERT BOSCH GMBH, 70442 Stuttgart (DE)
(72) Erfinder: MILLER, Frank, 74360 Ilsfeld (DE); OKRENT, Elmar, 71686 Remseck (DE)
(86) Internationale Anmeldenummer: PCT/EP2004/052636
(87) Internationale Veröffentlichungsnummer: WO 2005/043017

(56) Entgegenhaltungen:
- EP-A- 0 661 444
- DE-A- 19 503 736
- US-A- 4 331 317
- US-A- 4 621 788
- US-A- 5 197 672
- US-A- 5 232 167
- US-A- 6 089 467
- US-B1- 6 422 488

## Beschreibung

### Stand der Technik

Die Erfindung geht von einem Ventil zum Steuern eines Fluids, insbesondere zum Steuern eines Gases, gemäß der im Oberbegriff des Patentanspruches 1 näher definierten Art aus.

Ein Ventil dieser Art ist aus der Druckschrift US 4 621 788 bereits bekannt.

Ein derartiges Ventil ist aus der Praxis bekannt und beispielsweise als Gassteuerventil bei einer Brennstoffzelle oder auch bei einem Gasmotor einsetzbar.

Das bekannte Ventil umfasst ein Ventilgehäuse, das eine insbesondere elektromagnetische Betätigungseinheit für einen Magnetanker aufnimmt und mit einer Gehäusehülse versehen ist, in welcher der Magnetanker axial verschiebbar geführt ist. Der Magnetanker dient als Ventilschließglied und wirkt mit einem an einer Sitzplatte ausgebildeten Ventilsitz zusammen, so dass ein Fluidstrom durch Abströmöffnungen der Sitzplatte steuerbar ist.

Bei dem bekannten Gasventil besteht das Problem, dass aufgrund des zu steuernden, trockenen und gasförmigen Mediums hohe Verschleißanforderungen gestellt werden, die eine hochpräzise Führung des Magnetankers erforderlich machen. Dies kann durch die bisher eingesetzte Führung des Magnetankers in der Gehäusehülse nicht zuverlässig gewährleistet werden, da die Gehäusehülse mit hohen Rundheitsschwankungen und Durchmessertoleranzen behaftet sein kann, welche durch bei der Herstellung eingesetzte Tiefziehprozesse bedingt sind. Die Unrundheiten und die Durchmesserschwankungen verstärken die Kippneigung des Magnetankers, was wiederum zu einer Lebensdauerverkürzung des Ventils führen kann.

### Vorteile der Erfindung

Das erfindungsgemäße Ventil zum Steuern eines Fluids, insbesondere zum Steuern eines Gases mit den Merkmalen nach dem Oberbegriff des Patentanspruches 1, hat den Vorteil, dass die Ankerhülse auf einfache und kostengünstige Weise mit einem einheitlichen inneren Durchmesser und damit mit guten Rundlaufeigenschaften herstellbar ist, welche sich vorteilhaft auf die Dauerlaufeigenschaften des Ventils auswirken. Durch Einsatz der Ankerhülse liegt mithin eine zusätzliche Führungshülse vor, die optimierte Führungsverhältnisse und damit eine geringe Kippneigung des Magnetankers und folglich einen geringen Verschleiß im Bereich der Führung des Magnetankers und auch im Bereich des Ventilsitzes gewährleistet.

Ferner ermöglicht der einheitliche Innendurchmesser der Ankerhülse, dass der Magnetanker zur Herstellung eines mit der Ankerhülse korrespondierenden Außendurchmessers nach einem einfachen Serienverfahren, wie beispielsweise nach einem Durchgangsschleifverfahren, bearbeitet werden kann, da an dem Magnetanker insbesondere nur ein Führungsdurchmesser erforderlich ist.

Die Ankerhülse ist bei dem bekannten Ventil auf einfache Art und Weise integrierbar, so dass sie auch bei bestehenden Serienfertigungsverfahren ohne großen Aufwand in die Gehäusehülse integrierbar ist.

Das erfindungsgemäße Ventil ist insbesondere zur Massenstromregelung von Gasen wie Wasserstoff und Erdgas geeignet und kann beispielsweise bei einer Brennstoffzelle oder auch bei einem Gasmotor eingesetzt werden.

Bei einer speziellen Ausführungsform des Ventils nach der Erfindung ist die Ankerhülse über eine Pressverbindung mit der Sitzplatte verbunden. Insbesondere in diesem Fall kann eine Sitzplatte eingesetzt werden, die im Wesentlichen einer bisher eingesetzten Sitzplatte entspricht und mit geringem Aufwand zur Anbindung der Ankerhülse umgestaltet werden kann.

Alternativ oder auch zur weiteren Sicherung der Ankerhülse kann diese mit der Sitzplatte verschweißt sein. Es ist auch denkbar, dass die Ankerhülse über eine Klebeverbindung oder über eine Bördelung mit der Sitzplatte verbunden ist.

Bei einer alternativen Ausführungsform des erfindungsgemäß ausgestalteten Ventils ist die Ankerhülse einstückig mit der Sitzplatte hergestellt und insbesondere als Tiefziehteil ausgebildet. Die Ankerhülse und gegebenenfalls die Sitzplatte können auch als Drehteil, als MIM(Metall Injection Molding)-Teil, als Fließpressteil oder dergleichen ausgebildet sein.

Eine Dichtheitsprüfung des erfindungsgemäßen Ventils kann schon direkt an einer Funktionsgruppe durchgeführt werden, die aus der Ankerhülse, der Sitzplatte und dem Magnetanker besteht. Bei dem einleitend beschriebenen, bekannten Ventil kann eine Dichtheitsprüfung nur durchgeführt werden, wenn die aus dem Magnetanker und der Sitzplatte bestehende Baugruppe in die Gehäusehülse bzw. das Ventilgehäuse eingebaut wird.

Die Führung des Magnetankers in der Ankerhülse kann über mindestens einen Führungsbund, vorzugsweise über zwei Führungsbünde des Magnetankers erfolgen. Zur Optimierung eines magnetischen Flusses kann der Magnetanker auch einen Führungsbereich aufweisen, der sich in axialer Richtung des Magnetankers über einen weiten Bereich erstreckt und im Wesentlichen mit seinem gesamten Umfang an der Innenwandung der Ankerhülse anliegt.

Zur weiteren Optimierung des magnetischen Flusses kann der Magnetanker so ausgebildet sein, dass ein Bereich vergrößerten Durchmessers außerhalb der Ankerhülse angeordnet ist. In diesem Fall grenzt der Bereich vergrößerten Durchmessers gegebenenfalls über einen Ringspalt an die Gehäusehülse, die von der magnetischen Betätigungseinheit umschlossen ist. Denkbar ist es auch, dass der Bereich vergrößerten Durchmessers des Magnetankers an der Gehäusehülse geführt ist.

Weitere Vorteile und vorteilhafte Ausgestaltungen des Gegenstandes nach der Erfindung sind der Beschreibung, der Zeichnung und den Patentansprüchen entnehmbar.

### Zeichnung

Drei Ausführungsbeispiele eines erfindungsgemäßen Ventils sind in der Zeichnung schematisch vereinfach dargestellt und werden in der nachfolgenden Beschreibung näher erläutert. Es zeigen
Figur 1 einen Längsschnitt durch eine erste Ausführungsform eines Gasventils;
Figur 2 eine vergrößerte Darstellung des Bereichs II in Figur 1;
Figur 3 eine Funktionsgruppe aus einem Magnetanker und einer topfförmigen Ankerhülse einer zweiten Ausführungsform eines Gasventils;
Figur 4 die Funktionsgruppe nach Figur 3 in einer Gehäusehülse; und
Figur 5 eine Funktionsgruppe mit einem Magnetanker und einer Ankerhülse in einer Figur 4 entsprechende Darstellung, jedoch mit einem Magnetanker, der einen Bereich vergrößerten Durchmessers außerhalb einer Ankerhülse aufweist.

### Beschreibung der Ausführungsbeispiele

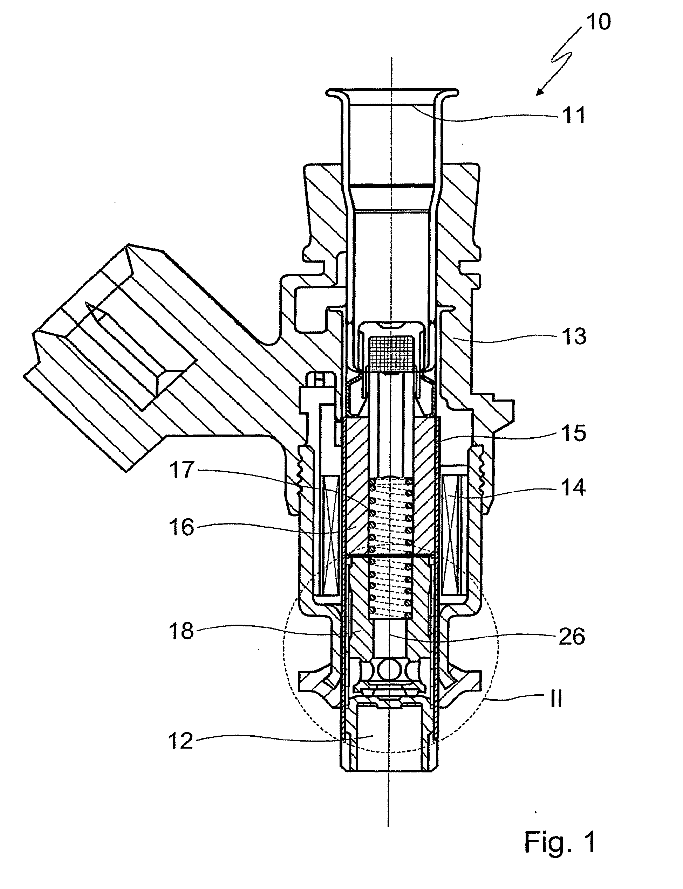

In Figur 1 ist ein Gasventil 10 dargestellt, das zum Einbau bei einer Brennstoffzelle oder bei einem Gasmotor ausgelegt ist und zur Regelung eines Wasserstoffstrom bzw. eines NG(Natural Gas)-Stroms von einer Zuströmseite 11 zu einer Abströmseite 12 dient.

Das Gasventil 10 hat ein mehrteiliges Gehäuse 13, das eine Magnetspule 14 aufnimmt und in dem eine Gehäusehülse 15 angeordnet ist.

In der Gehäusehülse 15 ist ein im Wesentlichen rohrförmiger Stopfen 16 fixiert, in den eine als Vorspannfeder dienende Spiralfeder 17 eingeschoben ist, die auf einen Magnetanker 18 wirkt, der längsverschieblich in der Gehäusehülse 15 angeordnet ist.

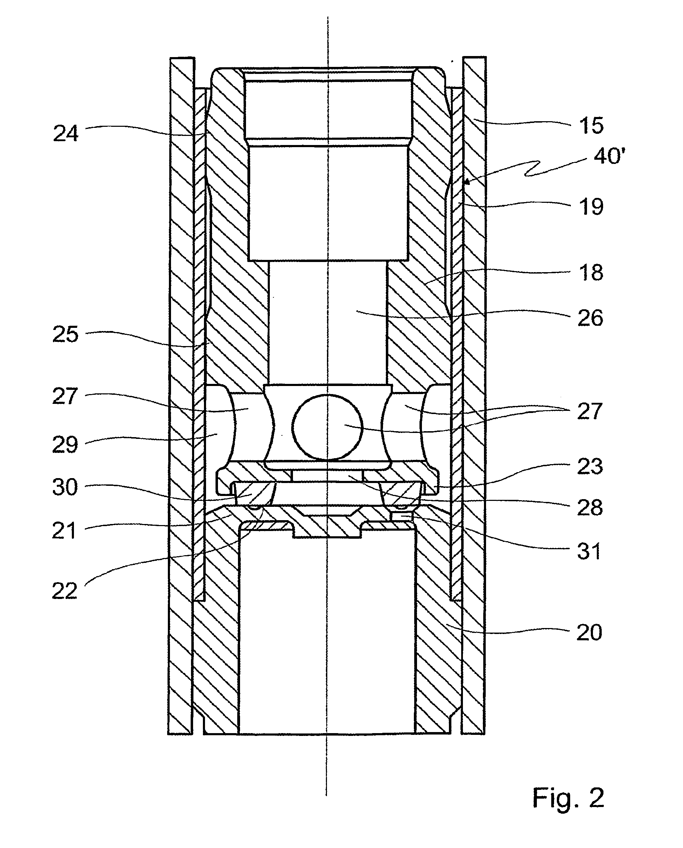

Wie insbesondere Figur 2 zu entnehmen ist, ist der Magnetanker 18 entlang einer Ankerhülse 19 geführt, die auf ein topfförmiges Bauteil 20 aufgepresst ist, dessen Bodenbereich eine Sitzplatte 21 bildet, an der ein Ventilsitz 22 für einen als Ventilschließglied dienenden Stirnbereich 23 des Magnetankers 18 ausgebildet ist. Zur Sicherung ist die Ankerhülse 19 mit dem topfförmigen Bauteil 20, das in die Gehäusehülse 15 eingepresst ist, verschweißt. Die Ankerhülse 19, der Magnetanker 18 und die Sitzplatte 21 bilden eine Funktionsgruppe 40.

Zur Führung in der Ankerhülse 19 weist der Magnetanker 18 an seinem Umfang zwei Führungsbünde 24 und 25 auf, die zur Herstellung des mit dem Innendurchmesser der Ankerhülse 19 korrespondierenden Außendurchmessers nach einem Durchgangsschleifverfahren bearbeitet sind.

Der Magnetanker 18, der im Wesentlichen rohrförmig ausgebildet ist, hat einen Innenraum 26, der mit der Zuströmseite 11 des Ventils 10 verbunden ist und von dem radiale Abströmbohrungen 27 und eine axiale Abströmbohrung 28 abzweigen. Die radialen Abströmbohrungen 27 führen zu einem Hochdruckraum 29, der einerseits von dem Magnetanker 18 und andererseits von der Ankerhülse 19 begrenzt ist. Die axiale Abströmbohrung 28 führt an die Stirnseite des Magnetankers 18.

An der Stirnseite des als Ventilschließglied ausgebildeten Stirnbereichs 23 des Magnetankers 18 ist des Weiteren ein aus einem Elastomer bestehender Dichtring 30 angeordnet, der mit dem Ventilsitz 22 derart zusammenwirkt, dass ein Fluidstrom durch Abströmöffnungen bzw. -düsen 31 steuerbar ist, die entlang einer Kreislinie in der Sitzplatte 21 des topfförmigen Bauteils 20 ausgebildet sind und zu der Abströmseite 12 des Gasventils 10 führen.

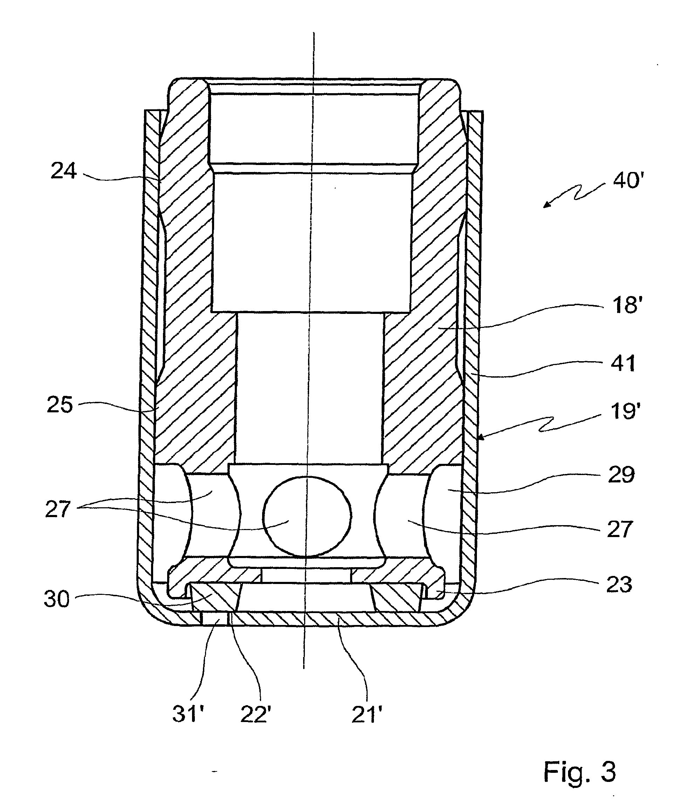

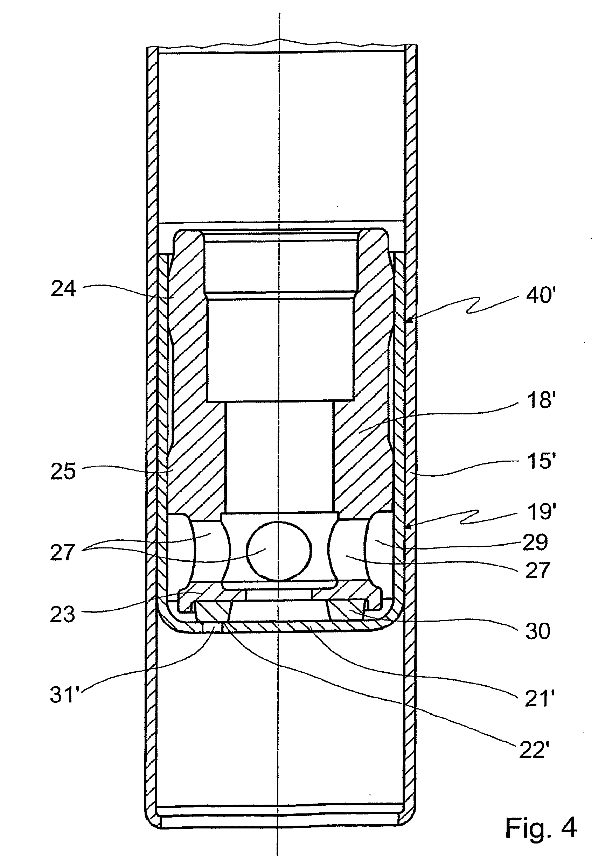

In den Figuren 3 und 4 ist eine alternative Ausführungsform einer aus einem Magnetanker 18' und einer Ankerhülse 19' bestehenden Funktionsgruppe 40' dargestellt, die zum Einbau in eine Gehäusehülse 15' eines Gasventils der in Figur 1 dargestellten Art dient.

Der Aufbau des Magnetankers 18' entspricht dem Aufbau des in Figur 2 näher dargestellten Magnetankers. Jedoch ist die Ankerhülse 19' derart aufgebaut, dass sie aus einem zylindrischen Wandbereich 41, an dem der Magnetanker 18' über seine Führungsbünde 24 und 25 geführt ist, und einem als Sitzplatte dienenden Bodenbereich 21' besteht, der einen Ventilsitz 22' zur Anlage einer an der Stirnseite des Magnetankers 18' angeordneten Dichtung 30 dient und in dem Abströmöffnungen bzw. -düsen 31' angeordnet sind, die zu der Abströmseite des ansonsten nicht näher dargestellten Gasventils führen.

Die Abströmdüsen 31' sind nach einem Stanzverfahren, nach einem Laserbohrverfahren oder dergleichen in die Sitzplatte 21' eingebracht.

Die die Sitzplatte 21' aufweisende Ankerhülse 19' bildet ein Tiefziehteil, bei dem der Ventilsitz 21' schon an der in Figur 3 dargestellten Funktionsgruppe 40' auf Dichtheit geprüft werden kann und bei dem die Führung für den Magnetanker 18' und der Ventilsitz 21' mit optimierten Form- und Lagetoleranzen herstellbar sind. Damit haben die Dichtung 30 und der Ventilsitz 21' eine optimale Lage zueinander, was eine hohe Dichtheit des Ventilsitzes 21' gewährleistet.

Zur Sicherung in der Gehäusehülse 15' ist die Ankerhülse 19' des Weiteren mit der Gehäusehülse 18' verschweißt.

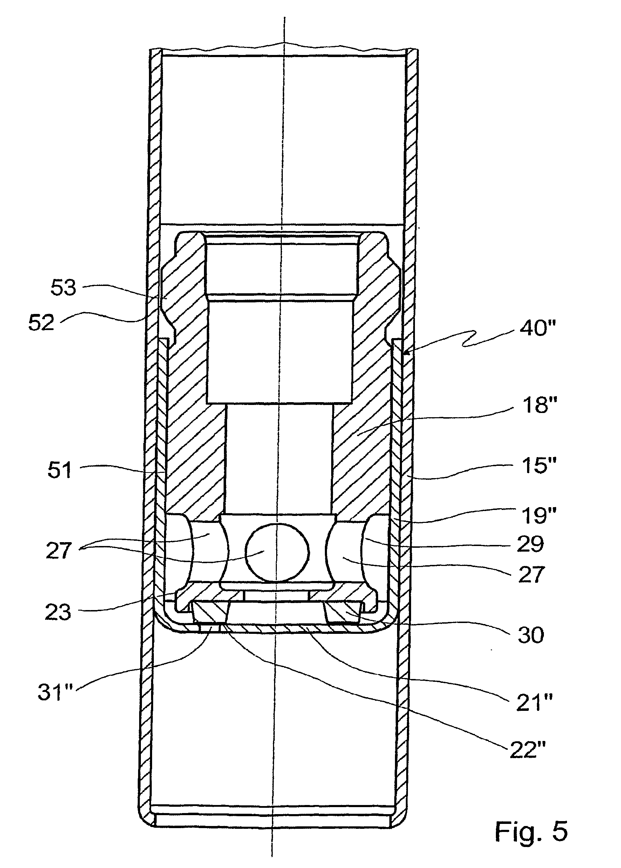

In Figur 5 ist eine dritte Ausführungsform einer Funktionsgruppe 40" zum Einbau in eine Gehäusehülse 15'' eines Gasventils der in Figur 1 näher dargestellten Art gezeigt. Die Funktionsgruppe 40" entspricht weitgehend der in den Figuren 3 und 4 dargestellten Funktionsgruppe 40', unterscheidet sich von dieser aber dadurch, dass sie einen Magnetanker 18'' aufweist, der über eine lange Führungsfläche 51 in einer Ankerhülse 19'' geführt ist, die wie bei der Ausführungsform nach den Figuren 3 und 4 ein Tiefziehteil darstellt, das einstückig mit einer Sitzplatte 21'' gefertigt ist und an der ein Ventilsitz 22'' sowie Abströmdüsen 31'' ausgebildet sind. Der Ventilsitz 22'' wirkt mit einer an der Stirnseite des Magnetankers 18'' angeordneten Dichtung 30 zusammen.

Der Magnetanker 18'' hat einen Bereich 52 vergrößerten Durchmessers, der an der der Dichtung 30 abgewandten Seite ausgebildet ist und außerhalb der Ankerhülse 19'' angeordnet ist. Der Bereich 52 vergrößerten Durchmessers grenzt über einen schmalen Ringspalt 53 an die Gehäusehülse 15'' und ist mithin nicht an letzterer geführt.

Alternativ kann ein Magnetanker der in Figur 5 gezeigten Art in einer Ankerhülse geführt sein, die entsprechend der Ausführungsform nach Figur 2 über einen Presssitz mit einer Sitzplatte verbunden ist, die mit Abströmdüsen versehen ist und an der der Ventilsitz ausgebildet ist.

## Patentansprüche

1. Ventil zum Steuern eines Fluids, insbesondere zum Steuern eines Gases, umfassend ein Ventilgehäuse (13) mit einer Gehäusehülse (15, 15', 15") und eine elektromagnetische Betätigungseinheit (14) für einen Magnetanker (18, 18' 18"), der axial verschiebbar geführt ist und mit einem an einer Sitzplatte (21, 21', 21") ausgebildeten Ventilsitz (22, 22', 22") zusammenwirkt, so dass ein Fluidstrom durch Abströmöffnungen (31, 31', 31") der Sitzplatte (21, 21', 21") steuerbar ist, wobei der Magnetanker (18, 18', 18") an einer Ankerhülse (19, 19', 19") geführt ist, die in der Gehäusehülse (15, 15', 15") angeordnet ist,
**dadurch gekennzeichnet,**
**dass** an dem Magnetanker (18, 18', 18") ein ringförmiger Dichtring (30) vorgesehen ist, der mit dem Ventilsitz (22, 22', 22") der Sitzplatte (21, 21', 21") zusammenwirkt, wobei in der Sitzplatte (21, 21'. 21") mehrere Abströmöffnungen (31, 31'. 31") vorgesehen sind, die bei geschlossenem Ventil von dem Dichtring (30) verschlossen sind.

2. Ventil nach Anspruch 1,
**dadurch gekennzeichnet,**
**dass** die Ankerhülse (19) über eine Pressverbindung mit der Sitzplatte (21) verbunden ist.

3. Ventil nach Anspruch 1 oder 2,
**dadurch gekennzeichnet,**
**dass** die Ankerhülse (19) mit der Sitzplatte (21) verschweißt ist.

4. Ventil nach Anspruch 1,
**dadurch gekennzeichnet,**
**dass** die Ankerhülse (19', 19") einstückig mit der Sitzplatte (21', 21") hergestellt ist und insbesondere ein Tiefziehteil bildet.

5. Ventil nach einem der Ansprüche 1 bis 4,
**dadurch gekennzeichnet,**
**dass** der Magnetanker (18, 18') über mindestens einen Führungsbund (24, 25) in der Ankerhülse (19,19') geführt ist.

6. Ventil nach Anspruch 5,
**dadurch gekennzeichnet,**
**dass** der Magnetanker (18, 18') über zwei Führungsbünde (24, 25) in der Ankerhülse (19, 19') geführt ist.

7. Ventil nach einem der Ansprüche 1 bis 6,
**dadurch gekennzeichnet,**
**dass** ein Bereich (52) vergrößerten Durchmessers des Magnetankers (18") außerhalb der Ankerhülse (19") angeordnet ist.

8. Ventil nach Anspruch 7,
**dadurch gekennzeichnet,**
**dass** der Bereich (52) vergrößerten Durchmessers an der Gehäusehülse (15") geführt ist.

9. Ventil nach Anspruch 1,
**dadurch gekennzeichnet,**
**dass** der Dichtring (30) aus einem Elastomer besteht.

## Claims

1. Valve for controlling a fluid, in particular for controlling a gas, comprising a valve housing (13) with a housing sleeve (15, 15', 15'') and an electromagnetic operating unit (14) for a magnet armature (18, 18', 18'') which is guided in an axially displaceable manner and interacts with a valve seat (22, 22', 22'') which is formed on a seat plate (21, 21', 21''), so that a flow of fluid through outflow openings (31, 31', 31'') in the seat plate (21, 21', 21'') can be controlled, with the magnet armature (18, 18', 18'') being guided on an armature sleeve (19, 19', 19'') which is arranged in the housing sleeve (15, 15', 15''), **characterized in that** an annular sealing ring (30) which interacts with the valve seat (22, 22', 22'') of the seat plate (21, 21', 21'') is provided on the magnet armature (18, 18', 18''), with a plurality of outflow openings (31, 31', 31''), which are sealed by the sealing ring (30) when the valve is closed, being provided in the seat plate (21, 21', 21'').

2. Valve according to Claim 1, **characterized in that** the armature sleeve (19) is connected to the seat plate (21) by means of a crimp connection.

3. Valve according to Claim 1 or 2, **characterized in that** the armature sleeve (19) is welded to the seat plate (21).

4. Valve according to Claim 1, **characterized in that** the armature sleeve (19', 19'') is integrally produced with the seat plate (21', 21'') and, in particular, forms a deep-drawn part.

5. Valve according to one of Claims 1 to 4,
**characterized in that** the magnet armature (18, 18') is guided in the armature sleeve (19, 19') by means of at least one guide collar (24, 25).

6. Valve according to Claim 5, **characterized in that** the magnet armature (18, 18') is guided in the armature sleeve (19, 19') by means of two guide collars (24, 25).

7. Valve according to one of Claims 1 to 6,
**characterized in that** a region (52) of increased diameter of the magnet armature (18'') is arranged outside the armature sleeve (19'').

8. Valve according to Claim 7, **characterized in that** the region (52) of increased diameter is guided on the housing sleeve (15'').

9. Valve according to Claim 1, **characterized in that** the sealing ring (30) comprises an elastomer.

## Revendications

1. Soupape pour commander un fluide, en particulier pour commander un gaz, comprenant un boîtier de soupape (13) avec une douille de boîtier (15, 15', 15") et une unité d'actionnement (14) électromagnétique pour un induit magnétique (18, 18', 18"), qui est guidé de manière déplaçable axialement et qui coopère avec un siège de soupape (22, 22', 22") réalisé sur une plaque de siège (21, 21', 21"), de sorte qu'un flux de fluide à travers des ouvertures de sortie (31, 31', 31") de la plaque de siège (21, 21', 21") puisse être commandé, l'induit magnétique (18, 18', 18") étant guidé sur une douille d'induit (19, 19', 19") qui est disposée dans la douille de boîtier (15, 15', 15"),
**caractérisée en ce que**
l'on prévoit sur l'induit magnétique (18, 18', 18") une bague d'étanchéité annulaire (30) qui coopère avec le siège de soupape (22, 22', 22") de la plaque de siège (21, 21', 21"), plusieurs ouvertures de sortie (31, 31', 31") étant prévues dans la plaque de siège (21, 21', 21"), lesquelles sont fermées par la bague d'étanchéité (30) lorsque la soupape est fermée.

2. Soupape selon la revendication 1,
**caractérisée en ce que**
la douille d'induit (19) est connectée à la plaque de siège (21) par le biais d'une connexion par compression.

3. Soupape selon la revendication 1 ou 2,
**caractérisée en ce que**
la douille d'induit (19) est connectée à la plaque de siège (21) par soudage.

4. Soupape selon la revendication 1,
**caractérisée en ce que**
la douille d'induit (19', 19") est fabriquée d'une seule pièce avec la plaque de siège (21', 21") et forme notamment une unité emboutie.

5. Soupape selon l'une quelconque des revendications 1 à 4,
**caractérisée en ce que**
l'induit magnétique (18, 18') est guidé dans la douille d'induit (19, 19') par le biais d'au moins un épaulement de guidage (24, 25).

6. Soupape selon la revendication 5,
**caractérisée en ce que**
l'induit magnétique (18, 18') est guidé dans la douille d'induit (19, 19') par le biais de deux épaulements de guidage (24, 25).

7. Soupape selon l'une quelconque des revendications 1 à 6,
**caractérisée en ce**
**qu'**une région (52) de diamètre agrandi de l'induit magnétique (18") est prévue en dehors de la douille d'induit (19").

8. Soupape selon la revendication 7,
**caractérisée en ce que**
la région (52) de diamètre agrandi est guidée sur la douille de boîtier (15").

9. Soupape selon la revendication 1,
**caractérisée en ce que**
la bague d'étanchéité (30) se compose d'un élastomère.
